# FASCICULE DE BREVET EUROPEEN

(11) **EP 3 039 475 B1**
(45) Date de publication et mention de la délivrance du brevet: **13.09.2023**
(21) Numéro de dépôt: 14765881.9
(22) Date de dépôt: 27.08.2014
(51) Int. Cl.: G02B 21/06

(54) **SYSTEME ET METHODE DE MICROSCOPIE PAR ECLAIRAGE PAR LA TRANCHE**
MIKROSKOPIESYSTEM UND -VERFAHREN MT KANTENBELEUCHTUNG
SYSTEM AND METHOD OF SINGLE PLANE ILLUMINATION MICROSCOPY

(30) Priorité: 28.08.2013 FR 1358226
(43) Date de publication de la demande: 06.07.2016
(73) Titulaire: Imagine Optic, 91400 Orsay (FR); Centre National de la Recherche Scientifique (C.N.R.S.), 75016 Paris (FR); Université de Bordeaux, 33076 Bordeaux (FR)
(72) Inventeur: LEVECQ, Xavier, 91190 Gif-sur-Yvette (FR); VIASNOFF, Virgile, 92170 Vanves (FR); SIBARITA, Jean-Baptiste, 33400 Talence (FR); STUDER, Vincent, 33000 Bordeaux (FR); GALLAND, Rémi, 33600 Pessac (FR)
(74) Mandataire: Osha Liang
(86) Numéro de dépôt international: PCT/EP2014/068139
(87) Numéro de publication internationale: WO 2015/028493

(56) Documents cités:
- WO-A1-2014/009080
- US-A1- 2006 012 855

## Description

### ETAT DE L'ART

### Domaine technique de l'invention

La présente invention concerne un système et une méthode de microscopie par éclairage par la tranche.

### Etat de l'art

La microscopie optique permet de suivre les cellules vivantes dans leur environnement natif. On connait par exemple la microscopie de fluorescence qui permet l'observation directe des échantillons biologiques de faible épaisseur ou des techniques de microscopie qui permettent de réaliser des images dans des échantillons plus épais telles que la microscopie confocale à balayage laser ou la microscopie multi photonique (non linéaire).

Récemment, des dispositifs de microscopie de fluorescence pour échantillons épais ont été décrits, basés sur une illumination par la tranche de l'échantillon, et connus sous le nom de microscopes à feuille de lumière ou « SPIM » (abréviation de l'expression anglo-saxonne «Single Plane Illumination Microscopy »). La microscopie SPIM consiste à éclairer sélectivement un plan de l'échantillon transverse à l'axe de l'objectif de microscope, permettant de réaliser ainsi des sections optiques de l'échantillon pour une imagerie en profondeur. De tels dispositifs sont décrits par exemple dans la demande de brevet US 2011/0304723 mettant en oeuvre une illumination par faisceaux de Bessel, dans l'article de R. Jorand et al. («Deep and Clear Optical Imaging of Thick Inhomogeneous Samples » PlosOne Volume 7 Issue 4 (2012)), combinant la technique SPIM à une boucle d'optique adaptative sur la voie de détection pour améliorer la qualité de l'image, dans l'article de F.Zanacchi et al («Live-cell 3D super resolution imaging in thick biological samples» Nature Methods/Vol.8 No. 12 (2011)) appliquant la technique SPIM à de la microscopie de super résolution, ou encore dans l'article de Gebhart et al. («Single-molecule imaging of transcription factor binding to DNA in live mammalian cells» Nature Methods DOI:10.1038/NMETH 2411 (2013)) proposant un arrangement avec deux objectifs de microscope d'axes parallèles et un miroir de déflexion.

Jusqu'à ce jour, la technique SPIM a toujours nécessité cependant l'utilisation de 2 objectifs de microscope placés à une distance proche de l'échantillon. Outre l'objectif de microscope habituel sur la voie de détection, permettant d'assurer la conjugaison optique entre la tranche de l'échantillon illuminée par la feuille de lumière et le plan de détection, un deuxième objectif de microscope est nécessaire sur la voie d'illumination de l'échantillon, pour assurer la focalisation de la feuille de lumière dans l'échantillon, formant ainsi deux voies indépendantes d'illumination et de détection respectivement. Cette contrainte apporte cependant une complexité mécanique importante de mise en oeuvre, ne permet pas d'utiliser des microscopes standards et impose des limitations sur l'ouverture numérique des objectifs utilisés.

L'invention propose un système et une méthode de microscopie par éclairage par la tranche comprenant notamment un contrôle original de la focalisation de la feuille de lumière, permettant l'utilisation d'un objectif de microscope unique commun aux voies d'illumination et de détection.

### RESUME DE L'INVENTION

Selon un premier aspect tel que défini dans la revendication 1, l'invention concerne un système de microscopie d'un échantillon épais avec illumination par la tranche de l'échantillon, comprenant un support d'échantillon, une voie de détection et une voie d'illumination de l'échantillon.

La voie de détection comprend un objectif de microscope d'axe optique donné, un dispositif de détection comprenant une surface de détection conjuguée optiquement avec une surface d'imagerie objet dans l'espace objet de l'objectif de microscope, et des moyens de déplacement axial relatif de l'objectif de microscope et du support de l'échantillon.

La voie d'illumination de l'échantillon comprend au moins une source d' émission d'un faisceau d'illumination, des moyens pour former à partir du faisceau d'illumination une surface d'illumination, ledit objectif de microscope , des moyens de déflexion solidaires de support d'échantillon permettant de défléchir la surface d'illumination dans l'espace objet en sortie de l' objectif de microscope, pour former une surface d'illumination transverse, située dans un plan sensiblement perpendiculaire à l'axe optique de l'objectif de microscope et des moyens de balayage du faisceau d'illumination permettant un déplacement de la surface d'illumination transverse le long de l'axe optique de l'objectif de microscope.

Le système de microscopie selon le premier aspect comprend en outre des moyens de mise au point permettant de superposer la surface d'imagerie objet et la surface d'illumination transverse, comprenant des moyens distincts des moyens de déplacement axial relatif de l'objectif de microscope et du support de l'échantillon.

Comme cela sera détaillé par la suite, la « surface » d'imagerie objet et la « surface » d'illumination transverse ne sont pas rigoureusement des surfaces au sens géométrique du terme, mais plutôt des volumes parallélépipédiques dont on cherche généralement à rendre l'épaisseur (dimension selon l'axe optique de l'objectif de microscope) la plus fine possible.

La « superposition » de la « surface d'imagerie obj et » et de la « surface d'illumination transverse », consiste ainsi à ramener dans un même plan les plans médians des deux volumes parallélépipédiques et à les centrer l'un par rapport à l'autre latéralement.

L'architecture du système de microscopie ainsi réalisé permet de contrôler dans un système de type SPIM à objectif de microscope unique, la position de la surface d'illumination transverse ou « feuille de lumière » dans l'espace objet de l'objectif de microscope, de telle sorte qu'elle reste superposée sur la surface d'imagerie objet de l'objectif, quelle que soit la position relative selon l'axe optique de l'objectif de microscope entre l'objectif de microscope et le support de l'échantillon.

Selon une variante, le système de microscopie comprend en outre un dispositif de modulation spatiale du front d'onde, situé dans la voie de détection. Le dispositif de modulation spatiale du front d'onde peut permettre, selon une variante, la correction d'au moins une partie des défauts optiques entre l'échantillon et la surface de détection.

Selon la présente description, les moyens de mise au point comprennent des moyens de variation de la focalisation du faisceau d'illumination, permettant de centrer latéralement la surface d'illumination transverse sur la surface d'imagerie objet. De tels moyens sont particulièrement avantageux dans le cas de déplacements recherchés importants de la feuille de lumière dans l'échantillon.

Par exemple, les moyens de variation de la focalisation du faisceau d'illumination peuvent comprendre un système optique à puissance fixe couplé à un système optique à focale variable.

Selon la présente description, les moyens de déflexion sont solidaires du support de l'échantillon. Cela est particulièrement avantageux lorsque les moyens de déplacement axial relatif de l'objectif de microscope et du support de l'échantillon comprennent des moyens de déplacement axial du support de l'échantillon. Ainsi, le déplacement du support d'échantillon entraîne le déplacement des moyens de déflexion.

Selon un deuxième aspect tel que défini dans la revendication 6, l'invention concerne un dispositif d'illumination par la tranche adapté à un microscope comprenant un objectif de microscope avec une surface d'imagerie objet, des moyens de déplacement relatif axial d'un support d'échantillon avec l'objectif de microscope et un détecteur avec une surface de détection conjuguée optiquement avec la surface d'imagerie objet.

Le dispositif d'illumination selon le deuxième aspect comprend au moins une source d'émission d'un faisceau d'illumination et des moyens pour former à partir du faisceau d'illumination une surface d'illumination. Il comprend en outre un support d'échantillon et des moyens de déflexion solidaires du support d'échantillon, les moyens de déflexion étant destinés à défléchir la surface d'illumination en sortie de l'objectif de microscope, pour former une surface d'illumination transverse, située dans un plan sensiblement perpendiculaire à l'axe optique de l'objectif de microscope. Le dispositif d'illumination selon le deuxième aspect comprend également des moyens de balayage du faisceau d'illumination permettant un déplacement de la surface d'illumination transverse le long de l'axe optique de l'objectif de microscope et des moyens de variation de la focalisation du faisceau d'illumination, permettant de centrer latéralement la surface d'illumination transverse (124) sur la surface d'imagerie obj et.

Un tel dispositif permet de transformer facilement un microscope classique de fluorescence à champ large en un système de microscopie à illumination par la tranche. Le support d'échantillon, muni des moyens de déflexion, peut être une pièce jetable après usage, qui remplace le support d'échantillon habituel du microscope.

Avantageusement, l'intégration du dispositif d'illumination par la tranche au microscope peut se faire au moyen d'une lame semi-réfléchissante ou d'une lame dichroïque, qui peut faire partie déjà du microscope, ou qui est fournie avec le dispositif d'illumination.

Selon un troisième aspect tel que défini dans la revendication 7, l'invention concerne une méthode de microscopie d'un échantillon épais agencé sur un support d'échantillon, avec illumination par la tranche de l'échantillon, comprenant :
- l'émission d'au moins un faisceau d'illumination;
- la formation à partir du faisceau d'illumination d'une surface d'illumination ;
- La focalisation de la surface d'illumination dans l'échantillon au moyen d'un objectif de microscope d'axe optique donné et la déflexion de la surface d'illumination issue de l'objectif de microscope permettant la formation d'une surface d'illumination transverse, située dans un plan sensiblement perpendiculaire à l'axe optique de l'objectif de microscope ;

- La formation, au moyen dudit objectif de microscope, de l'image d'une zone de l'échantillon éclairée par la surface d'illumination transverse sur une surface de détection d'un dispositif de détection;
- le balayage du faisceau d'illumination permettant un déplacement de la surface d'illumination transverse le long de l'axe optique de l'objectif de microscope ;
- la variation de la focalisation du faisceau d'illumination, permettant un centrage latéral de la surface d'illumination transverse sur une surface d'imagerie objet conjuguée dans l'espace objet de l'objectif de microscope avec la surface de détection, par des moyens de variation de la focalisation, distincts des moyens de déplacement axial relatif de l'objectif de microscope et de l'échantillon.

Selon une variante, la méthode de microscopie comprend en outre la correction d'au moins une partie des défauts optiques entre l'échantillon et la surface de détection au moyen d'un modulateur spatial de front d'onde.

Selon une variante, la formation à partir du faisceau d'illumination d'une surface d'illumination comprend la génération d'un pinceau lumineux et le balayage du pinceau lumineux.

### BREVE DESCRIPTION DES DESSINS

D'autres avantages et caractéristiques de l'invention apparaitront à la lecture de la description, illustrée par les figures suivantes :

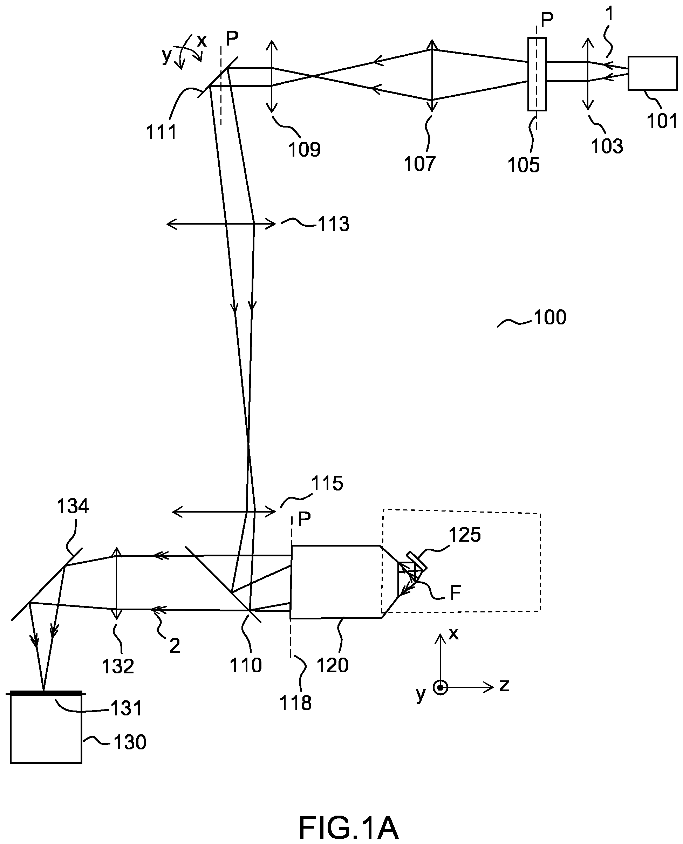

- Figure 1A, un schéma illustrant un système de microscope par éclairage par la tranche, selon un exemple de réalisation de l'invention ;

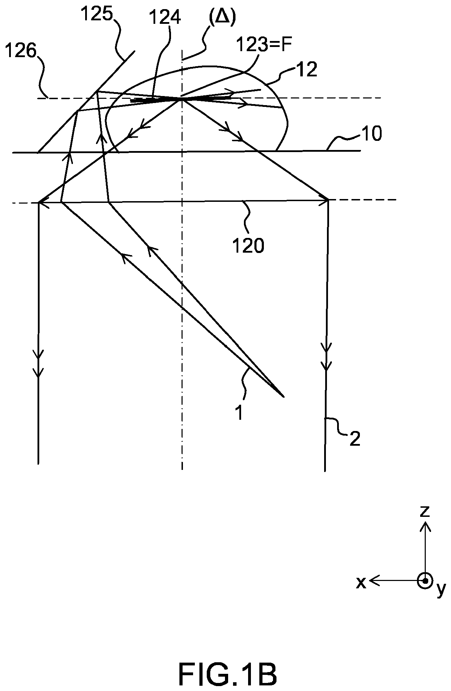

- Figure 1B, un schéma illustrant plus en détail la focalisation dans un système de microscopie du type de la figure 1A ;

Jusqu'à ce jour, la technique SPIM a toujours nécessité cependant l'utilisation de 2 objectifs de microscope placés à une distance proche de l'échantillon. Outre l'objectif de microscope habituel sur la voie de détection, permettant d'assurer la conjugaison optique entre la tranche de l'échantillon illuminée par la feuille de lumière et le plan de détection, un deuxième objectif de microscope est nécessaire sur la voie d'illumination de l'échantillon, pour assurer la focalisation de la feuille de lumière dans l'échantillon, formant ainsi deux voies indépendantes d'illumination et de détection respectivement. Cette contrainte apporte cependant une complexité mécanique importante de mise en oeuvre, ne permet pas d'utiliser des microscopes standards et impose des limitations sur l'ouverture numérique des objectifs utilisés.

L'invention propose un système et une méthode de microscopie par éclairage par la tranche comprenant notamment un contrôle original de la focalisation de la feuille de lumière, permettant l'utilisation d'un objectif de microscope unique commun aux voies d'illumination et de détection.

### RESUME DE L'INVENTION

Selon un premier aspect tel que défini dans la revendication 1, l'invention concerne un système de microscopie d'un échantillon épais avec illumination par la tranche de l'échantillon, comprenant un support d'échantillon, une voie de détection et une voie d'illumination de l'échantillon.

La voie de détection comprend un objectif de microscope d'axe optique donné, un dispositif de détection comprenant une surface de détection conjuguée optiquement avec une surface d'imagerie objet dans l'espace objet de l'objectif de microscope, et des moyens de déplacement axial relatif de l'objectif de microscope et du support de l'échantillon.

La voie d'illumination de l'échantillon comprend au moins une source d'émission d'un faisceau d'illumination, des moyens pour former à partir du faisceau d'illumination une surface d'illumination, ledit objectif de microscope , des moyens de déflexion solidaires de support d'échantillon permettant de défléchir la surface d'illumination dans l'espace objet en sortie de l'objectif de microscope, pour former une surface d'illumination transverse, située dans un plan sensiblement perpendiculaire à l'axe optique de l'objectif de microscope et des moyens de balayage du faisceau d'illumination permettant un déplacement de la surface d'illumination transverse le long de l'axe optique de l'objectif de microscope.

Le système de microscopie selon le premier aspect comprend en outre des moyens de mise au point permettant de superposer la surface d'imagerie objet et la surface d'illumination transverse, comprenant des moyens distincts des moyens de déplacement axial relatif de l'objectif de microscope et du support de l'échantillon.

Comme cela sera détaillé par la suite, la « surface » d'imagerie objet et la « surface » d'illumination transverse ne sont pas rigoureusement des surfaces au sens géométrique du terme, mais plutôt des volumes parallélépipédiques dont on cherche généralement à rendre l'épaisseur (dimension selon l'axe optique de l'objectif de microscope) la plus fine possible.

La « superposition » de la « surface d'imagerie obj et » et de la « surface d'illumination transverse », consiste ainsi à ramener dans un même plan les plans médians des deux volumes parallélépipédiques et à les centrer l'un par rapport à l'autre latéralement.

L'architecture du système de microscopie ainsi réalisé permet de contrôler dans un système de type SPIM à objectif de microscope unique, la position de la surface d'illumination transverse ou « feuille de lumière » dans l'espace objet de l'objectif de microscope, de telle sorte qu'elle reste superposée sur la surface d'imagerie objet de l'objectif, quelle que soit la position relative selon l'axe optique de l'objectif de microscope entre l'objectif de microscope et le support de l'échantillon.

Selon une variante, le système de microscopie comprend en outre un dispositif de modulation spatiale du front d'onde, situé dans la voie de détection. Le dispositif de modulation spatiale du front d'onde peut permettre en outre, selon une variante, la correction d'au moins une partie des défauts optiques entre l'échantillon et la surface de détection.

Selon la présente description, les moyens de mise au point comprennent des moyens de variation de la focalisation du faisceau d'illumination, permettant de centrer latéralement la surface d'illumination transverse sur la surface d'imagerie objet. De tels moyens sont particulièrement avantageux dans le cas de déplacements recherchés importants de la feuille de lumière dans l'échantillon.

Par exemple, les moyens de variation de la focalisation du faisceau d'illumination peuvent comprendre un système optique à puissance fixe couplé à un système optique à focale variable.

Selon la présente description, les moyens de déflexion sont solidaires du support de l'échantillon. Cela est particulièrement avantageux lorsque les moyens de déplacement axial relatif de l'objectif de microscope et du support de l'échantillon comprennent des moyens de déplacement axial du support de l'échantillon. Ainsi, le déplacement du support d'échantillon entraîne le déplacement des moyens de déflexion.

Selon un deuxième aspect tel que défini dans la revendication 6, l'invention concerne un dispositif d'illumination par la tranche adapté à un microscope comprenant un objectif de microscope avec une surface d'imagerie objet, des moyens de déplacement relatif axial d'un support d'échantillon avec l'objectif de microscope et un détecteur avec une surface de détection conjuguée optiquement avec la surface d'imagerie objet.

Le dispositif d'illumination selon le deuxième aspect comprend au moins une source d'émission d'un faisceau d'illumination et des moyens pour former à partir du faisceau d'illumination une surface d'illumination. Il comprend en outre un support d'échantillon et des moyens de déflexion solidaires du support d'échantillon, les moyens de déflexion étant destinés à défléchir la surface d'illumination en sortie de l'objectif de microscope, pour former une surface d'illumination transverse, située dans un plan sensiblement perpendiculaire à l'axe optique de l'objectif de microscope. Le dispositif d'illumination selon le deuxième aspect comprend également des moyens de balayage du faisceau d'illumination permettant un déplacement de la surface d'illumination transverse le long de l'axe optique de l'objectif de microscope et des moyens de variation de la focalisation du faisceau d'illumination, permettant de centrer latéralement la surface d'illumination transverse (124) sur la surface d'imagerie obj et.

Un tel dispositif permet de transformer facilement un microscope classique de fluorescence à champ large en un système de microscopie à illumination par la tranche. Le support d'échantillon, muni des moyens de déflexion, peut être une pièce jetable après usage, qui remplace le support d'échantillon habituel du microscope.

Avantageusement, l'intégration du dispositif d'illumination par la tranche au microscope peut se faire au moyen d'une lame semi-réfléchissante ou d'une lame dichroïque, qui peut faire partie déjà du microscope, ou qui est fournie avec le dispositif d'illumination.

Selon un troisième aspect tel que défini dans la revendication 7, l'invention concerne une méthode de microscopie d'un échantillon épais agencé sur un support d'échantillon, avec illumination par la tranche de l'échantillon, comprenant :
- l'émission d'au moins un faisceau d'illumination;
- la formation à partir du faisceau d'illumination d'une surface d'illumination ;
- La focalisation de la surface d'illumination dans l'échantillon au moyen d'un objectif de microscope d'axe optique donné et la déflexion de la surface d'illumination issue de l'objectif de microscope permettant la formation d'une surface d'illumination transverse, située dans un plan sensiblement perpendiculaire à l'axe optique de l'objectif de microscope ;

- La formation, au moyen dudit objectif de microscope, de l'image d'une zone de l'échantillon éclairée par la surface d'illumination transverse sur une surface de détection d'un dispositif de détection;
- le balayage du faisceau d'illumination permettant un déplacement de la surface d'illumination transverse le long de l'axe optique de l'objectif de microscope ;
- la variation de la focalisation du faisceau d'illumination, permettant un centrage latéral de la surface d'illumination transverse sur une surface d'imagerie objet conjuguée dans l'espace objet de l'objectif de microscope avec la surface de détection, par des moyens de variation de la focalisation, distincts des moyens de déplacement axial relatif de l'objectif de microscope et de l'échantillon, et se trouvant dans un plan conjugué optiquement d'un plan pupillaire de l'objectif de microscope.

Selon une variante, la méthode comprend en outre la correction d'au moins une partie des défauts optiques entre l'échantillon et la surface de détection au moyen d'un modulateur spatial de front d'onde.

Selon une variante, la formation à partir du faisceau d'illumination d'une surface d'illumination comprend la génération d'un pinceau lumineux et le balayage du pinceau lumineux.

### BREVE DESCRIPTION DES DESSINS

D'autres avantages et caractéristiques de l'invention apparaitront à la lecture de la description, illustrée par les figures suivantes :
- Figure 1A, un schéma illustrant un système de microscope par éclairage par la tranche, selon un exemple de réalisation de l'invention ;
- Figure 1B, un schéma illustrant plus en détail la focalisation dans un système de microscopie du type de la figure 1A ;
- Figure 2, un schéma illustrant le déplacement de la feuille de lumière selon l'axe Z dans l'espace objet de l'objectif de microscope;
- Figures 3A à 3C, des schémas illustrant en trois étapes la focalisation du faisceau d'illumination dans l'échantillon.

Par soucis de cohérence, les éléments identiques sont repérés par les mêmes références dans les différentes figures.

### DESCRIPTION DETAILLEE

Les figures 1A et 1B illustrent un système 100 de microscopie par éclairage par la tranche selon un exemple de réalisation de la présente description. La figure 1B représente plus en détails la partie du système encadrée en pointillés sur la figure 1A.

Le système de microscopie 100 comprend dans l'exemple des figures 1A et 1B, une voie d'illumination et une voie de détection séparées par une lame 110, par exemple une lame dichroïque ou une lame semi-réfléchissante, et comprenant dans une partie commune, un objectif de microscope 120.

Le système de microscopie comprend en outre des moyens de support de l'échantillon 12, comprenant une lamelle 10 et des moyens de déplacement relatifs du support de l'échantillon et de l'objectif de microscope (non représentés sur les figures), permettant de parcourir la zone d'intérêt à imager. Les moyens de déplacement du support comprennent par exemple une plate-forme motorisée (non représentée), par exemple une plateforme piézoélectrique, permettant de déplacer soit l'objectif de microscope, soit la lamelle 10 destinée à recevoir l'échantillon 12, dans un plan XY perpendiculaire à l'axe optique (Δ) de l'objectif de microscope ainsi que selon l'axe Z parallèle à l'axe optique (Δ) de l'objectif de microscope. Le système de microscopie est représenté sur les figures dans le plan XZ, où XZ représente un repère de l'espace objet de l'objectif de microscope, c'est à dire un plan perpendiculaire à la surface de la lamelle 10 de l'échantillon 12, comprenant l'axe optique de l'objectif de microscope.

La voie de détection est destinée à former une image d'une zone d'intérêt de l'échantillon sur une surface de détection 131 de moyens de détection 130, comprenant par exemple un détecteur matriciel, par exemple une caméra amplifiée de type EMCCD (abréviation de l'expression anglo-saxonne «Electron Multiplying Coupled Charge Display»). La voie de détection comprend l'objectif de microscope 120, destiné à travailler par exemple dans une configuration optique de travail foyer-infini, c'est-à-dire que, dans la configuration optimale de travail, le faisceau 2 émis par l'échantillon en un point F du centre du champ objet de l'objectif de microscope (appelée « surface d'imagerie objet ») est un faisceau collimaté à l'infini en sortie de l'objectif de microscope. La voie de détection comprend également des éléments optiques permettant la formation de l'image sur la surface de détection, par exemple une optique 132 et des moyens de déflexion 134.

La voie d'illumination comprend une ou plusieurs sources d'émission 101 d'un faisceau d'illumination 1 de l'échantillon, avantageusement une source lumineuse cohérente spatialement, par exemple une source fibrée dans une fibre monomode, par exemple une source laser. Dans un mode de réalisation de l'invention, plusieurs sources d'émission peuvent être prévues, par exemple pour former des faisceaux d'illumination à différentes longueurs d'ondes, permettant d'exciter différents fluorophores dans des applications de fluorescence, ou permettant respectivement la phot-activation, la photo-conversion et l'excitation des protéines fluorescentes dans des applications PALM par exemple. Un objectif 103 permet de former un faisceau collimaté de la source.

La voie d'illumination de l'échantillon comprend en outre des moyens pour former à partir du faisceau d'illumination une surface d'illumination. Ces moyens peuvent comprendre très simplement un objectif de faible ouverture numérique (par exemple l'objectif 103) permettant de former un pinceau lumineux de longueur de diffraction donnée, associé à des moyens de balayage (obtenus par exemple par une rotation du miroir rotatif 111) pour former une surface. Alternativement, des optiques spécifiques peuvent être utilisées pour former le pinceau lumineux, par exemple des éléments optiques non diffractifs, de type axicon, ou des éléments adaptés à la formation de faisceaux de type faisceaux de Bessel. En général, la surface d'illumination présentera une épaisseur directement liée à la longueur de diffraction, comme cela sera détaillé par la suite. Les moyens pour former la surface d'illumination peuvent comprendre également une lentille cylindrique combinée à l'objectif de faible ouverture ou à l'élément optique non diffractif, permettant de s'affranchir des moyens de balayage.

La voie d'illumination comprend en outre l'objectif de microscope 120 (représenté sur la figure 1B par une optique convergente) dont la pupille de sortie est référencée 118. Sur la figure 1A, les plans référencés P représentent les plans conjugués des plans de la pupille de sortie 118 de l'objectif de microscope 120. Les objectifs 107, 109 d'une part, et 113, 115 d'autre part, sont des optiques relais assurant le transport de faisceau d'illumination et la conjugaison des plans pupillaires P.

Dans l'espace objet de l'objectif de microscope 120 se trouve l'échantillon 12, et des moyens de déflexion 125, l'ensemble formé de l'objectif de microscope et des moyens de déflexion permettant d'imager la surface d'illumination en une surface d'illumination transverse 124, située dans un plan 126 sensiblement perpendiculaire à l'axe optique de l'objectif de microscope.

Les dimensions de la surface d'illumination transverse et son épaisseur sont définies par les paramètres de la voie d'illumination. Par exemple, si l'on se place dans le référentiel de la figure 1B, dans l'espace objet de l'objectif de microscope, la dimension Y de la surface d'illumination est définie, pour un système optique donné de la voie d'illumination, soit par l'amplitude du balayage du faisceau d'illumination dans la direction Y, soit par l'amplitude de l'astigmatisme introduit par une lentille cylindrique. La dimension X de la surface d'illumination ainsi que l'épaisseur (selon l'axe Z) de la surface d'illumination sont directement liées à la taille du faisceau d'excitation en entrée d'objectif ainsi qu'à la distance focale de l'objectif de microscope. Lorsque l'on parle d'épaisseur de la surface d'illumination, on entend la taille selon l'axe Z du lobe principale de la figure de diffraction mais aussi, dans le cas de faisceau d'illumination de type Bessel, le rapport entre l'énergie lumineuse concentrée dans ce lobe principal de la figure de diffraction et l'énergie dispersée dans les lobes secondaires. Ainsi, si l'on cherche une surface d'illumination transverse fine, typiquement du même ordre de grandeur que l'épaisseur de la surface d'imagerie objet, elle-même définie par la profondeur de champ de l'objectif de microscope, on obtiendra une surface d'illumination transverse plus courte selon l'axe X que si l'on accepte une épaisseur sensiblement plus importante de la surface d'illumination. Typiquement, pour un objectif de microscope x100, d'ouverture numérique O.N =1,3, la profondeur de champ est inférieure à 1µm. Les dimensions de la surface d'illumination transverse pourront être typiquement entre 10 et 50 µm selon l'axe X et environ 100 µm selon l'axe Y. Dans tous les cas, on peut définir un point central 123 de la surface d'illumination transverse 124 correspondant au point de meilleure focalisation selon X et au point central géométrique selon l'axe Y. Dans l'exemple de la figure 1B, le point central 123 est confondu avec le foyer objet F de l'objectif de microscope 120.

Les moyens de déflexion comprennent par exemple un micro-miroir incliné à 45° par rapport à l'axe optique de l'objectif de microscope. Les moyens de déflexion doivent présenter un encombrement compatible avec les objectifs de microscope de forte ouverture numérique. Selon l'axe Y (voir figure 1B), la taille de la surface réfléchissante est avantageusement sensiblement équivalente à la taille du champ de l'objectif de microscope utilisé. Selon l'axe incliné à 45° la taille de surface utile réfléchissante peut être avantageusement comprise entre le quart et la moitié du champ de l'objectif de microscope. De ce fait, la surface réfléchissante utile peut être de l'ordre de grandeur de 50x200= 10000 µm² pour les objectifs de fort grandissement (60x ou 100x), 5 fois plus grand pour les objectifs de plus faible grandissement (10x ou 20x), l'encombrement autour de la surface réfléchissante devant être du même ordre de grandeur que la surface réfléchissante. De façon à pouvoir réfléchir le faisceau d'illumination issu de l'objectif de microscope, la surface utile des moyens de déflexion doit être située dans le champ utile de l'objectif de microscope.

Des moyens de déflexion adaptés peuvent être formés par le support (ou « porte à faux ») d'une pointe de microscope à force atomique (voir par exemple l'article de Gebhart et al.), positionné à 45° de l'axe optique de l'objectif de microscope. Ils peuvent comprendre également une lame structurée, par exemple du type de celle décrite dans le brevet publié US7974003. Selon une variante, les moyens de déflexion sont conçus pour être solidaires du support d'échantillon, comme cela sera expliqué dans la suite de la description.

La voie d'illumination comprend par ailleurs des moyens de balayage 111 du faisceau d'illumination 1 permettant un déplacement de la surface d'illumination transverse 124 le long de l'axe optique de l'objectif de microscope.

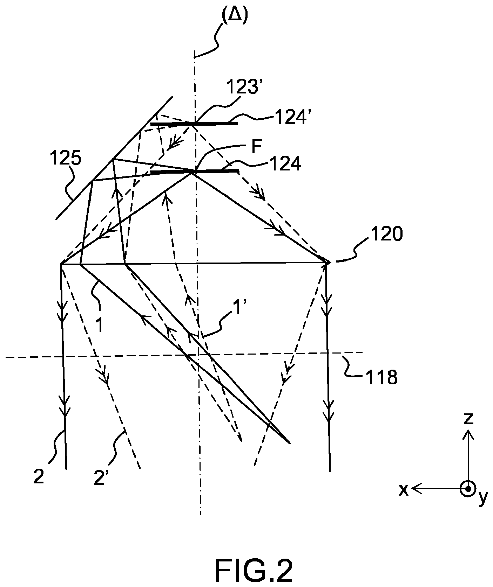

La figure 2 illustre le déplacement axial de la surface d'illumination transverse dans le système de microscopie selon la présente description.

Comme illustré sur la figure 2, le déplacement de la surface d'illumination transverse 124 le long de l'axe optique Δ de l'objectif de microscope (parallèle à l'axe Z) peut être avantageusement obtenu par balayage angulaire du faisceau d'illumination incident 1, entraînant un déplacement latéral du faisceau (selon l'axe X sur la figure 2). Ce déplacement latéral se traduit par un déplacement axial de la surface d'illumination après réflexion sur les moyens de déflexion 125 du faisceau incident, dans l'espace objet de l'objectif de microscope. Avantageusement l'axe de rotation du balayage angulaire est situé dans un plan conjugué optiquement de la pupille du microscope. Dans l'espace de l'objectif de microscope, la relation qui relie le déplacement ΔZ et la modification angulaire Δθ du faisceau est la suivante : ΔZ = f × Δθ où f est la longueur focale de l'objectif de microscope, cette expression étant valable dans le cadre des petits angles pour laquelle la tangente d'un angle peut être approximée à l'angle lui-même. Le champ angulaire des objectifs de microscope étant classiquement inférieurs à 10° cette approximation est valable pour les applications en microscopie. Ainsi sur la figure 2, la rotation du faisceau 1 forme le faisceau 1', ce qui résulte en un déplacement ΔZ de la surface d'illumination transverse. Cette rotation peut être obtenu par les moyens de balayage 111 de la voie d'illumination, qui comprennent par exemple une optique rotative qui permet de réaliser la translation du faisceau selon l'axe X pour réaliser le déplacement axial de la surface d'illumination et, éventuellement, selon l'axe Y pour fabriquer la surface d'illumination par balayage du faisceau d'illumination. Cette optique rotative peut être par exemple une combinaison de systèmes galvanométriques ou une combinaison de miroir MEMS (à un axe) ou un miroir MEMS à deux axes. Dans le cas où on utilise 2 miroirs distincts pour réaliser ces 2 rotations, il est avantageux que les axes de rotations de ces 2 miroirs soient conjugués optiquement.

Il est ainsi possible grâce aux moyens de balayage, de sonder l'échantillon en déplaçant la surface d'illumination transverse 124 le long de l'axe optique du microscope. En déplaçant la surface d'illumination transverse 124 comme cela apparaît sur la figure 2, la zone de l'échantillon éclairée ne se trouve plus dans le plan de travail objet de l'objectif de microscope, par exemple le plan focal objet, et n'est plus conjuguée avec la surface de détection. Le système de microscopie selon la présente description comprend des moyens de mise au point, dont des moyens distincts des moyens de déplacement axial relatif de l'objectif de microscope et de l'échantillon, qui vont permettre de superposer la surface d'illumination transverse et la surface d'imagerie objet (surface conjuguée de la surface de détection dans le plan objet de l'objectif de microscope).

Si le déplacement est petit, typiquement inférieur à 10 fois la profondeur de champ de l'objectif de microscope, il est possible de corriger la défocalisation résultante sur la voie de détection, simplement en déplaçant la surface de détection. Les moyens de mise au point sont réduits à des moyens de déplacement axial de la surface de détection. Les moyens de mise au point peuvent également comprendre un dispositif de modulation spatiale du front d'onde agencé sur la voie de détection. Le dispositif de modulation spatiale peut comprendre une simple lentille optique (par exemple la lentille 132) déplacée pour corriger la mise au point, ou peut comprendre un système optique à puissance variable, une valve à cristaux liquides, un miroir déformable, etc. Des moyens de mise au point sur la voie de détection présentent l'avantage de n'apporter aucune contrainte ni aucun déplacement au niveau de l'objectif de microscope et/ou l'échantillon.

Cependant, si le déplacement est important, la surface d'illumination transverse s'éloigne du plan de travail objet pour lequel l'objectif de microscope a été conçu, par exemple le plan focal objet, et s'écarter notablement de cette configuration peut apporter non seulement des aberrations optiques significatives mais aussi une variation de l'ouverture numérique. Les moyens de mise au point comprennent alors avantageusement, dans la voie d'illumination, des moyens 105 (voir figure 1A) de variation de la focalisation du faisceau d'illumination, permettant de centrer latéralement la surface d'illumination transverse 124 sur la surface d'imagerie objet.

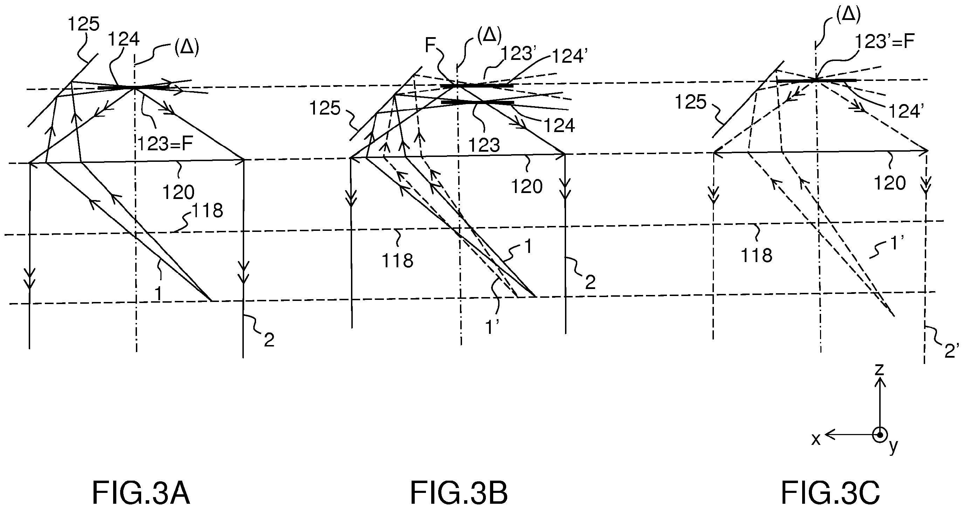

Les figures 3A à 3C illustrent selon un exemple, le rattrapage de focalisation dans la méthode de microscopie selon la présente description, mettant en oeuvre les moyens 105 de variation de la focalisation du faisceau d'illumination.

La figure 3A correspond à la figure 1B précédemment décrite, dans laquelle un faisceau 1 est focalisé sous forme d'une surface d'illumination transverse 124 dans le plan de travail objet de l'objectif de microscope, par exemple le plan focal objet. Dans cette configuration, le faisceau 2 émis par l'échantillon (lumière de fluorescence par exemple), est collimaté à l'infini en sortie de l'objectif de microscope, dans la voie de détection, et parfaitement focalisé sur la surface de détection du détecteur. Ainsi dans l'espace objet de l'objectif de microscope, la surface d'illumination transverse et la surface d'imagerie objet, conjuguée de la surface de détection dans l'espace objet de l'objectif de microscope, sont superposées.

La figure 3B illustre le cas où le faisceau 1 est balayé (dans l'espace image de l'objectif de microscope) afin de déplacer la surface d'illumination transverse dans l'échantillon. Le faisceau après balayage, référencé 1', permet de former une surface d'illumination transverse 124' décalée par rapport à la première position de la surface d'illumination transverse d'un déplacement Δz. Pour repositionner la surface de détection transverse 124' dans le plan de travail objet du microscope, un déplacement relatif entre l'échantillon et l'objectif de microscope selon l'axe optique de l'objectif de microscope est réalisé. Ainsi sur la figure 3B, la surface d'illumination transverse 124' se trouve à la même distance selon l'axe Z de l'objectif de microscope que la surface d'illumination transverse 124 sur la figure 3A, c'est-à-dire dans le plan de travail objet de l'objectif de microscope et le faisceau 2' émis par l'échantillon est à nouveau collimaté à l'infini en sortie de l'objectif de microscope, dans la voie de détection, puis parfaitement focalisé sur la surface de détection du détecteur. Cependant, le déplacement axial relatif de l'échantillon et de l'objectif de microscope induit comme cela apparaît sur la figure 3B un déplacement latéral de la surface d'illumination transverse. Ainsi, le point 123 de meilleure focalisation, correspondant au centre de la surface d'illumination transverse se trouve décalé par rapport à l'axe optique de l'objectif de microscope, ce décalage résultant du déplacement axial relatif de l'objectif de microscope et de l'échantillon. Autrement dit, la surface d'imagerie objet et la surface d'illumination transverse sont bien dans le même plan, mais décentrées. Les moyens 105 de variation de la focalisation du faisceau d'illumination permettent alors de recentrer latéralement la surface d'illumination transverse 124 sur la surface d'imagerie objet, comme cela est illustré sur la figure 3C.

Les moyens 105 de variation de la focalisation comprennent par exemple une lentille optique à focale variable (par exemple une lentille de type Varioptic^{®}, Optotunes^{®}, Polight^{®}, LensVector^{®}) ou un objectif dans lequel une ou un groupe de lentilles est mobile, ou bien un miroir déformable ou encore une valve à cristaux liquides.

Avantageusement, les moyens 105 de variation de la focalisation se trouvent dans un plan conjugué optiquement du plan pupillaire de l'objectif de microscope qui est, en général, positionné sur le plan focal image de l'objectif de microscope. De cette manière, la modification du plan de focalisation du faisceau d'illumination ne change pas la taille de faisceau dans le plan de la pupille de l'objectif de microscope et, par conséquent, l'épaisseur de la surface d'illumination.

Dans un mode de réalisation de l'invention, les moyens 105 de variation de la focalisation peuvent être une combinaison d'un système à puissance fixe couplé à un système à focale variable. Le système à puissance fixe peut être utilisé pour compenser la distance moyenne de focalisation liée à l'utilisation des moyens de déflexion (cette distance est environ égale au rayon du champ de vue de l'objectif dans l'espace objet (espace de l'échantillon), soit 40 à 60µm typiquement pour un objectif 100x). Les moyens de variation de la focalisation sont dimensionnés pour avoir une amplitude ajustable suffisante pour couvrir la plage d'imagerie en profondeur désirée par l'utilisateur. Par exemple, si le champ d'excursion en profondeur désiré sur l'échantillon est de 50µm, on pourra choisir des moyens de variation de la focalisation permettant un déplacement en z d'au moins 50µm autour du plan de focalisation moyen.

Dans un mode de réalisation de l'invention, la voie de détection peut comprendre un dispositif de correction des aberrations optiques introduites sur la voie de détection (par le système optique d'imagerie ainsi que par l'échantillon lui-même). Le dispositif de correction des aberrations optiques comprend par exemple un miroir déformable. Il peut être commandé par un dispositif d'analyse des défauts optiques, par exemple de type Shack-Hartmann. Le dispositif de correction des aberrations optiques peut également être utilisé pour le rattrapage de focalisation, ainsi que cela a été décrit précédemment. Dans le cadre de microscopie 3D de type pointilliste (PALM/STORM/SPT), le dispositif de correction des aberrations peut aussi être utilisé pour faire du façonnage de la PSF de façon à établir une relation bijective entre la forme de la PSF et la position en z de la particule émettrice (comme cela est décrit par exemple dans la demande FR2971693).

Le système de microscopie décrit permet ainsi de faire des images en volume en réalisant des images dans plusieurs plans consécutifs en profondeur dans l'échantillon, au moyen d'un objectif de microscope unique.

Il est également possible d'adapter un système de microscopie connu pour de l'imagerie à deux dimensions, pour réaliser un système de microscopie à trois dimensions, grâce à un dispositif d'illumination par la tranche selon la présente description. Un microscope connu pour de l'imagerie à deux dimensions (microscopie de champ large) comprend typiquement un objectif de microscope avec une surface d'imagerie objet, des moyens de déplacement relatif axial d'un support d'échantillon avec l'objectif de microscope et un détecteur avec une surface de détection conjuguée optiquement avec la surface d'imagerie objet.

Le dispositif d'illumination par la tranche comprend avantageusement au moins une source d'émission d'un faisceau d'illumination ; des moyens pour former à partir du faisceau d'illumination une surface d'illumination ; un support d'échantillon et des moyens de déflexion solidaires du support d'échantillon, les moyens de déflexion étant destinés à défléchir la surface d'illumination en sortie de l'objectif de microscope, pour former une surface d'illumination transverse, située dans un plan sensiblement perpendiculaire à l'axe optique de l'objectif de microscope ; des moyens de balayage du faisceau d'illumination permettant un déplacement de la surface d'illumination transverse le long de l'axe optique de l'objectif de microscope ; des moyens de variation de la focalisation du faisceau d'illumination, permettant de centrer latéralement la surface d'illumination transverse sur la surface d'imagerie objet. L'ensemble de ces moyens a été décrit ci-dessus en relation avec le système de microscopie par éclairage par la tranche.

Selon une variante, le support d'échantillon et les moyens de déflexion solidaires du support d'échantillon sont fournis avec le dispositif d'illumination du microscope à adapter, en remplacement du support d'échantillon habituellement utilisé.

Le dispositif d'illumination par la tranche et le système de microscopie décrits dans la présente demande, peuvent être appliqués à toutes les techniques de microscopie bénéficiant déjà des avantages de la technique d'illumination transverse par feuille de lumière, et notamment à la microscopie champ large de fluorescence et à la microscopie de super résolution de type pointilliste (PALM/STORM/SPT). Dans ces deux types de microscopie, l'éclairage transverse par feuille de lumière permet d'obtenir un effet de « sectionning » optique (seule la tranche d'intérêt est éclairée), et permet d'obtenir un meilleur rapport signal à bruit du signal de détection car seule la tranche imagée est éclairée ; il n'y a donc pas de lumière parasite provenant des couches de l'échantillon situées de part et d'autre du plan imagé, permettant d'imager des molécules individuelles plus en profondeur. Le système de microscopie s'applique également à la microscopie non linéaire, ou bien la microscopie en illumination structurée SIM (« Structured illumination microscopy »).

Bien que décrite à travers un certain nombre d'exemples de réalisation, la méthode de microscopie selon l'invention et le dispositif pour la mise en oeuvre de ladite méthode comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

## Revendications

1. Système de microscopie (100) d'un échantillon épais (12) avec illumination par la tranche de l'échantillon, comprenant :
- un support d'échantillon ;
- une voie de détection comprenant :
- un objectif de microscope (120) d'axe optique donné (Δ) ;
- un dispositif de détection (130) comprenant une surface de détection (131) conjuguée optiquement avec une surface d'imagerie objet dans l'espace objet de l'objectif de microscope;
- des moyens de déplacement axial relatif de l'objectif de microscope et du support de l'échantillon ;
- une voie d'illumination de l'échantillon comprenant :
- au moins une source d'émission (101) d'un faisceau d'illumination (1);
- des moyens pour former à partir du faisceau d'illumination une surface d'illumination ;
- ledit objectif de microscope (120) ;
- des moyens de déflexion (125) solidaires de support d'échantillon permettant de défléchir la surface d'illumination dans l'espace objet en sortie de l'objectif de microscope, pour former une surface d'illumination transverse (124), située dans un plan sensiblement perpendiculaire à l'axe optique de l'objectif de microscope ;
- des moyens de balayage (111) du faisceau d'illumination permettant un déplacement de la surface d'illumination transverse (124) le long de l'axe optique de l'objectif de microscope ;
le système de microscopie comprenant en outre :
- des moyens (105) de variation de la focalisation du faisceau d'illumination, permettant de centrer latéralement la surface d'illumination transverse (124) sur la surface d'imagerie objet;
- lesdits moyens (105) de variation de la focalisation étant distincts des moyens de déplacement axial relatif de l'objectif de microscope et du support de l'échantillon et se trouvant dans un plan conjugué optiquement d'un plan pupillaire de l'objectif de microscope.

2. Système de microscopie selon la revendication 1, dans lequel les moyens (105) de variation de la focalisation du faisceau d'illumination comprennent un système optique à puissance fixe couplé à un système optique à focale variable.

3. Système de microscopie selon l'une quelconque des revendications précédentes, comprenant en outre un dispositif de modulation spatiale du front d'onde, situé dans la voie de détection, configuré pour la correction d'au moins une partie des défauts optiques entre l'échantillon et la surface de détection.

4. Système de microscopie selon l'une quelconque des revendications précédentes, dans lequel les moyens pour former la surface d'illumination comprennent des moyens de génération d'un pinceau lumineux et des moyens de balayage du pinceau lumineux.

5. Système de microscopie selon l'une quelconque des revendications 1 à 3, dans lequel les moyens pour former la surface d'illumination comprennent une lentille cylindrique.

6. Dispositif d'illumination par la tranche adapté à un microscope comprenant un objectif de microscope avec une surface d'imagerie objet, des moyens de déplacement relatif axial d'un support d'échantillon avec l'objectif de microscope et un détecteur avec une surface de détection conjuguée optiquement avec la surface d'imagerie objet, le dispositif d'illumination comprenant :
- au moins une source d'émission (101) d'un faisceau d'illumination (1);
- des moyens pour former à partir du faisceau d'illumination une surface d'illumination ;
- un support d'échantillon et des moyens de déflexion (125) solidaires de support d'échantillon, les moyens de déflexion étant destinés à défléchir la surface d'illumination en sortie de l'objectif de microscope, pour former une surface d'illumination transverse (124), située dans un plan sensiblement perpendiculaire à l'axe optique de l'objectif de microscope ;
- des moyens de balayage (111) du faisceau d'illumination permettant un déplacement de la surface d'illumination transverse (124) le long de l'axe optique de l'objectif de microscope ;
- des moyens (105) de variation de la focalisation du faisceau d'illumination, permettant de centrer latéralement la surface d'illumination transverse (124) sur la surface d'imagerie objet, lesdits moyens (105) de variation de la focalisation étant distincts des moyens de déplacement axial relatif de l'objectif de microscope et du support de l'échantillon et étant configurés pour être positionnés dans un plan conjugué optiquement d'un plan pupillaire de l'objectif de microscope.

7. Méthode de microscopie d'un échantillon épais (12) agencé sur un support d'échantillon, avec illumination par la tranche de l'échantillon, comprenant :
- l'émission d'au moins un faisceau d'illumination (1);
- La formation à partir du faisceau d'illumination d'une surface d'illumination ;
- La focalisation de la surface d'illumination dans l'échantillon au moyen d'un objectif de microscope (120) d'axe optique donné (Δ) et la déflexion de la surface d'illumination issue de l'objectif de microscope permettant la formation d'une surface d'illumination transverse (124), située dans un plan sensiblement perpendiculaire à l'axe optique de l'objectif de microscope ;
- La formation, au moyen dudit objectif de microscope, de l'image d'une zone de l'échantillon éclairée par la surface d'illumination transverse sur une surface de détection (131) d'un dispositif de détection (130);
- le balayage du faisceau d'illumination permettant un déplacement de la surface d'illumination transverse (124) le long de l'axe optique de l'objectif de microscope ;
- la variation de la focalisation du faisceau d'illumination, permettant un centrage latéral de la surface d'illumination transverse sur une surface d'imagerie objet conjuguée dans l'espace objet de l'objectif de microscope avec la surface de détection, par des moyens (105) de variation de la focalisation, distincts des moyens de déplacement axial relatif de l'objectif de microscope et de l'échantillon, et se trouvant dans un plan conjugué optiquement d'un plan pupillaire de l'objectif de microscope.

8. Méthode de microscopie selon la revendication 7, comprenant en outre la correction d'au moins une partie des défauts optiques entre l'échantillon et la surface de détection au moyen d'un modulateur spatial de front d'onde.

9. Méthode de microscopie selon l'une quelconque des revendications 7 ou 8, dans laquelle la formation à partir du faisceau d'illumination d'une surface d'illumination comprend la génération d'un pinceau lumineux et le balayage du pinceau lumineux.

## Patentansprüche

1. Mikroskopiesystem (100) für eine dicke Probe (12) mit einer Scheibenbeleuchtung der Probe, aufweisend:
- einen Probenträger;
- einen Detektionspfad, aufweisend:
- ein Mikroskopobjektiv (120) mit vorgegebener optischer Achse (Δ);
- eine Detektionsvorrichtung (130), aufweisend eine Detektionsfläche (131), die optisch mit einer Objektabbildungsfläche im Objektraum des Mikroskopobjektivs konjugiert;
- Mittel zur relativen axialen Bewegung des Mikroskopobjektivs und des Probenhalters;
- einen Probenbeleuchtungspfad, aufweisend:
- mindestens eine Emissionsquelle (101) für einen Lichtstrahl (1);
- Mittel, um aus dem Lichtstrahl eine Beleuchtungsfläche zu bilden;
- das Mikroskopobjektiv (120);
- Ablenkmittel (125), die fest mit dem Probenträger verbunden sind und es ermöglichen, die Beleuchtungsfläche in den Objektraum am Ausgang des Mikroskopobjektivs abzulenken, um eine transversale Beleuchtungsfläche (124) zu bilden, die in einer Ebene liegt, die im Wesentlichen senkrecht zur optischen Achse des Mikroskopobjektivs verläuft;
- eine Einrichtung (111) zum Ablenken des Lichtstrahls, die eine Bewegung der transversalen Beleuchtungsfläche (124) entlang der optischen Achse des Mikroskopobjektivs ermöglicht;
wobei das Mikroskopiesystem ferner aufweist:
- Mittel (105) zur Veränderung der Fokussierung des Lichtstrahls, die es ermöglichen, die transversale Beleuchtungsfläche (124) seitlich auf der Abbildungsfläche des Objekts zu zentrieren;
- wobei die Mittel (105) zur Veränderung der Fokussierung von den Mitteln zur relativen axialen Verschiebung des Mikroskopobjektivs und des Probenträgers verschieden sind.

2. Mikroskopiesystem nach Anspruch 1, wobei die Mittel (105) zur Veränderung der Fokussierung des Lichtstrahls ein optisches System mit fester Leistung aufweisen, das mit einem optischen System mit variabler Brennweite gekoppelt ist.

3. Mikroskopiesystem nach einem der vorhergehenden Ansprüche, das ferner eine im Detektionspfad befindliche Vorrichtung zur räumlichen Modulation der Wellenfront aufweist, die so ausgebildet ist, dass sie mindestens einen Teil der optischen Fehler zwischen der Probe und der Detektionsfläche korrigiert.

4. Mikroskopiesystem nach einem der vorhergehenden Ansprüche, wobei die Mittel zur Bildung der Beleuchtungsfläche Mittel zur Erzeugung eines Lichtstrahls und Mittel zur Ablenkung des Lichtstrahls aufweisen.

5. Mikroskopiesystem nach einem der Ansprüche 1 bis 3, wobei die Mittel zur Bildung der Beleuchtungsfläche eine Zylinderlinse aufweisen.

6. Scheibenbeleuchtungsvorrichtung, die an ein Mikroskop angepasst ist, das ein Mikroskopobjektiv mit einer Objektabbildungsfläche, Mittel zur axialen Relativbewegung eines Probenträgers mit dem Mikroskopobjektiv und einen Detektor mit einer Detektionsfläche aufweist, die optisch mit der Objektabbildungsfläche konjugiert, wobei die Beleuchtungsvorrichtung aufweist:
- mindestens eine Emissionsquelle (101) für einen Lichtstrahl (1);
- Mittel, um aus dem Lichtstrahl eine Beleuchtungsfläche zu bilden;
- einen Probenträger und Ablenkmittel (125), die fest mit dem Probenträger verbunden sind, wobei die Ablenkmittel dazu bestimmt sind, die Beleuchtungsfläche am Ausgang des Mikroskopobjektivs abzulenken, um eine transversale Beleuchtungsfläche (124) zu bilden, die in einer Ebene liegt, die im Wesentlichen senkrecht zur optischen Achse des Mikroskopobjektivs verläuft;
- Mittel (111) zum Ablenken des Beleuchtungsstrahls, die eine Bewegung der transversalen Beleuchtungsfläche (124) entlang der optischen Achse des Mikroskopobjektivs ermöglichen;
- Mittel (105) zur Veränderung der Fokussierung des Lichtstrahls, die eine seitliche Zentrierung der transversalen Beleuchtungsfläche (124) auf die Objektabbildungsfläche ermöglichen.

7. Mikroskopieverfahren für eine dicke Probe (12), die auf einem Probenhalter angeordnet ist, mit Scheibenbeleuchtung der Probe, aufweisend:
- Emittieren mindestens eines Lichtstrahls (1);
- Bilden einer Beleuchtungsfläche aus dem Lichtstrahl;
- Fokussieren der Beleuchtungsfläche in der Probe mittels eines Mikroskopobjektivs (120) mit vorgegebener optischer Achse (□) und Ablenken der Beleuchtungsfläche aus dem Mikroskopobjektiv, wodurch eine transversale Beleuchtungsfläche (124) gebildet wird, die in einer Ebene liegt, die im Wesentlichen senkrecht zur optischen Achse des Mikroskopobjektivs verläuft;
- Das Erzeugen, mittels des Mikroskopobjektivs, des Bildes eines Bereichs der Probe, der von der transversalen Beleuchtungsfläche beleuchtet wird, auf einer Detektionsfläche (131) einer Detektionsvorrichtung (130);
- Ablenken des Lichtstrahls, wodurch die transversale Beleuchtungsfläche (124) entlang der optischen Achse des Mikroskopobjektivs bewegt wird;
- Veränderung der Fokussierung des Lichtstrahls, die eine seitliche Zentrierung der transversalen Beleuchtungsfläche auf einer Objektabbildungsfläche ermöglicht, die im Objektraum des Mikroskopobjektivs mit der Detektionsfläche konjugiert, durch Mittel (105) zur Veränderung der Fokussierung, die von den Mitteln zur relativen axialen Verschiebung des Mikroskopobjektivs und der Probe verschieden sind.

8. Mikroskopieverfahren nach Anspruch 7, das außerdem die Korrektur mindestens eines Teils der optischen Fehler zwischen der Probe und der Detektionsfläche mittels eines räumlichen Wellenfrontmodulators aufweist.

9. Mikroskopieverfahren nach einem der Ansprüche 7 oder 8, wobei das Bilden einer Beleuchtungsfläche aus dem Lichtstrahl das Erzeugen eines Lichtstrahls und das Ableiten des Lichtstrahls aufweist.

## Claims

1. A microscopy system (100) for a thick sample (12) with transverse-illumination of the sample, comprising:
- a sample holder;
- a detection pathway comprising:
- a microscope lens (120) of given optical axis (Δ);
- a detection device (130) comprising a detection surface (131) optically conjugate with an object imaging surface in the object space of the microscope lens;
- means for relative axial displacement of the microscope lens and of the sample holder;
- a sample illumination pathway comprising:
- at least one emission source (101) of an illumination beam (1);
- means for forming, from the illumination beam, an illumination surface;
- said microscope lens (120);
- deflection means (125) secured to the sample holder making it possible to deflect the illumination surface in the object space at the output of the microscope lens, to form a transverse illumination surface (124), situated in a plane substantially at right angles to the optical axis of the microscope lens;
- illumination beam scanning means (111) allowing a displacement of the transverse illumination surface (124) along the optical axis of the microscope lens;
the microscopy system further comprising:
- means (105) for varying the focusing of the illumination beam, making it possible to laterally center the transverse illumination surface (124) on the object imaging surface;
- said means (105) for varying the focusing being separate from the relative axial displacement means of the microscope lens and of the sample holder.

2. The microscopy system as claimed in claim 1, in which the means (105) for varying the focusing of the illumination beam comprise an optical system with fixed power coupled to an optical system with variable focal length.

3. The microscopy system as claimed in any one of the preceding claims, further comprising a wavefront spatial modulation device, situated in the detection pathway, configured for the correction of at least a part of the optical defects between the sample and the detection surface.

4. The microscopy system as claimed in any one of the preceding claims, in which the means for forming the illumination surface comprise means for generating a light pencil and means for scanning the light pencil.

5. The microscopy system as claimed in any one of claims 1 to 3, in which the means for forming the illumination surface comprise a cylindrical lens.

6. A transverse-illumination device adapted to a microscope comprising a microscope lens with an object imaging surface, means for relative axial displacement of a sample holder with the microscope lens and a detector with a detection surface optically conjugate with the object imaging surface, the illumination device comprising:
- at least one emission source (101) of an illumination beam (1);
- means for forming, from the illumination beam, an illumination surface;
- a sample holder and deflection means (125) secured to the sample holder, the deflection means being intended to deflect the illumination surface at the output of the microscope lens, to form a transverse illumination surface (124), situated in a plane substantially at right angles to the optical axis of the microscope lens;
- illumination beam scanning means (111) allowing a displacement of the transverse illumination surface (124) along the optical axis of the microscope lens;
- means (105) for varying the focusing of the illumination beam, making it possible to laterally center the transverse illumination surface (124) on the object imaging surface.

7. A microscopy method for a thick sample (12) arranged on a sample holder, with transverse-illumination of the sample, comprising:
- the emission of at least one illumination beam (1);
- the formation, from the illumination beam, of an illumination surface;
- the focusing of the illumination surface in the sample by means of a microscope lens (120) of given optical axis (Δ) and the deflection of the illumination surface deriving from the microscope lens allowing the formation of a transverse illumination surface (124), situated in a plane substantially at right angles to the optical axis of the microscope lens;
- the formation, by means of said microscope lens, of the image of a zone of the sample illuminated by the transverse illumination surface on a detection surface (131) of a detection device (130);
- the scanning of the illumination beam allowing a displacement of the transverse illumination surface (124) along the optical axis of the microscope lens;
- the variation of the focusing of the illumination beam, allowing for a lateral centering of the transverse illumination surface on an object imaging surface conjugate in the object space of the microscope lens with the detection surface, by means (105) of variation of the focusing, separate from the relative axial displacement means of the microscope lens and of the sample.

8. The microscopy method as claimed in claim 7, further comprising the correction of at least a part of the optical defects between the sample and the detection surface by means of a wavefront spatial modulation device.

9. The microscopy method as claimed in any one of claims 7 or 8, in which the formation, from the illumination beam, of an illumination surface comprises the generation of a light pencil and the scanning of the light pencil.
